(19) Europäisches Patentamt
European Patent Office
Office européen des brevets

(11) **EP 3 281 077 B1**

(12) **EUROPÄISCHE PATENTSCHRIFT**

(45) Veröffentlichungstag und Bekanntmachung des Hinweises auf die Patenterteilung:
**01.06.2022   Patentblatt 2022/22**

(21) Anmeldenummer: **16719767.2**

(22) Anmeldetag: **08.04.2016**

(51) Internationale Patentklassifikation (IPC):
***G05D 1/02*** (2020.01)

(52) Gemeinsame Patentklassifikation (CPC):
**G05D 1/0234; G05D 1/0293;** G05D 2201/0216

(86) Internationale Anmeldenummer:
**PCT/EP2016/000578**

(87) Internationale Veröffentlichungsnummer:
**WO 2016/162124 (13.10.2016 Gazette 2016/41)**

(54) **LAGE- UND POSITIONSERKENNUNG FÜR EINE FÖRDEREINRICHTUNG**

LOCATION AND POSITION DETECTION FOR A CONVEYING APPARATUS

DÉTECTION D'ORIENTATION ET DE POSITION POUR UN SYSTÈME DE TRANSPORT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.04.2015   DE 102015004330**

(43) Veröffentlichungstag der Anmeldung:
**14.02.2018   Patentblatt 2018/07**

(73) Patentinhaber: **pentanova cs GmbH**
**71032 Böblingen (DE)**

(72) Erfinder: **SCHULZE, Herbert**
**71134 Aidlingen (DE)**

(74) Vertreter: **Ostertag & Partner Patentanwälte mbB**
**Azenbergstraße 35**
**70174 Stuttgart (DE)**

(56) Entgegenhaltungen:
EP-A2- 2 827 213    WO-A1-2011/123656
WO-A2-2009/043474    DE-A1- 10 240 227

EP 3 281 077 B1

**Beschreibung**

Die Erfindung betrifft eine Fördereinrichtung zum Fördern von beladenen oder unbeladenen Ladungsträgern, mit einer ersten Fördereinheit und einer zweiten Fördereinheit, wobei jede Fördereinheit auf Bodenrollen verfahrbar ist und die erste und die zweite Fördereinheit relativ zueinander und voneinander unabhängig bewegbar sind.

Eine derartige Fördereinrichtung an sich ist beispielsweise aus der DE 10 2007 046 868 A1 bekannt. In dem genannten Dokument bilden jeweils zwei Fördereinheiten nach Art einer Förderkufe eine Fördereinrichtung. Die beiden Förderkufen sind für das Fördern von Ladungsträgern in Form von Paletten, insbesondere von sogenannten Euro-Paletten, konzipiert. Hierzu können die beiden Förderkufen als Förderkufenpaar eine Palette unterfahren, diese dann anheben, in angehobenen Zustand an einen Ort fördern und dort wieder absetzen.

Die Druckschrift EP 2 827 213 A2 beschreibt einen Fahrzeugverbund aus Erntemaschine mit einem als Überladeeinrichtung ausgebildeten Auswurfkrümmer und Transportfahrzeug zur Aufnahme des Ernteguts.

Die WO 2011 / 123 656 A1 beschreibt ein ferngesteuertes Gerät, welches seine Ortsposition anhand des Empfangs wenigstens eines Emitters ermittelt.

Zur Koordinierung der gemeinsamen Bewegung der beiden Fördereinheiten ist die Kenntnis um die relative Ausrichtung der beiden Fördereinheiten und insbesondere um eventuell vorhandene oder entstehende Winkelfehlausrichtungen unabdingbar. Zur Ermittlung der genauen relativen Position werden bei vergleichbaren Aufgaben aufwändige optische Systeme wie beispielsweise Lasermesssysteme eingesetzt. Diese liefern die gewünschten Daten zuverlässig und mit der notwendigen Genauigkeit. Solche Systeme sind aber aufgrund der geforderten Genauigkeit aufwendig und teuer. Zudem sind derartige optische Messsysteme fehleranfällig. Bei einem Einsatz in oder an Förderkufen, die beispielsweise unter Euro-Paletten fahren, treten leicht Verschmutzungen oder Beschädigungen in Form von Kratzern auf, die schnell zu einer hohen Fehlerrate und damit zu einem Ausfall des Systems führen können.

Es ist eine Aufgabe der Erfindung, eine Fördereinrichtung zum Fördern von beladenen oder unbeladenen Ladungsträgern anzugeben, welche die genannten Nachteile vermeidet und insbesondere kostengünstig und robust ist.

Diese Aufgabe wird durch eine Fördereinheit gemäß dem unabhängigen Anspruch 1 sowie durch eine Fördereinrichtung gemäß dem unabhängigen Anspruch 1 gelöst. Weitere Ausgestaltungen der Erfindung sind in den abhängigen Ansprüchen angegeben.

Die erfindungsgemäße Fördereinheit ist so ausgelegt, dass sie für eine Fördereinrichtung zum Fördern von beladenen oder unbeladenen Ladungsträgern eingesetzt werden kann. Sie weist Bodenrollen auf, so dass die Fördereinheit entlang einer Fahrrichtung verfahrbar ist. Weiter weist die Fördereinheit eine Kamera zur Erfassung eines Bildes eines auf einer Oberfläche bereitgestellten Merkmals oder einer Merkmalskombination auf. Das Merkmal oder die Merkmalskombination weist eine Erstreckung in Fahrrichtung und eine Erstreckung senkrecht zu der Fahrrichtung auf. Die Erstreckung in Fahrrichtung und senkrecht zu der Fahrrichtung sind für die Kamera erfassbar. Aus den erfassten Merkmalserstreckungen in Fahrrichtung und senkrecht zur Fahrrichtung können unter Kenntnis der tatsächlichen Erstreckungen des Merkmals oder der Merkmalskombination Aussagen über die relative Lage und die relative Position der Fördereinheit zu dem Merkmal oder der Merkmalskombination getroffen werden. Dies kann auf einfache Weise unter Verwendung einer Kamera geschehen, die keine besonders hohe Auflösung benötigt. Die Merkmale oder die Merkmalskombinationen können in der von der Fördereinheit befahrbaren Umgebung bereitgestellt werden. Dies können feststehende Oberflächen wie Begrenzungs- oder Leitwände oder bewegliche Objekte wie etwa eine zweite mitfahrende Fördereinheit sein.

Bei einer bevorzugten Ausführungsform kann vorgesehen sein, dass die Fördereinheit eine Projektionsvorrichtung zur Projektion des Merkmals oder der Merkmalskombination von der Fördereinheit auf eine Oberfläche aufweist. Das Merkmal oder die Merkmalskombination können somit auf eine optisch von der Fördereinheit erreichbare Oberfläche projiziert werden. Mittels der Projektion können sowohl an einer feststehenden Oberfläche als auch beispielsweise bei einer mitbewegten Fördereinheit zu beliebigen Zeitpunkten, beispielsweise intermittierend oder kontinuierlich, Informationen über die relative Position und die relative Lage gewonnen werden.

Insbesondere kann vorgesehen sein, dass die Fördereinheit dazu eingerichtet ist, mittels des erfassten Bildes zumindest einen Abstand der Fördereinheit zu dem Merkmal oder der Merkmalskombination und einen Winkel zwischen der Fördereinheit und der Erstreckung des Merkmals in Fahrrichtung zu ermitteln. Diese beiden Größen erlauben eine Relativpositionsbestimmung der Fördereinheit, die unter Umständen bereits ausreichend für den Betrieb der Fördereinheit ist oder gegebenenfalls durch weitere Informationen aus anderen Quellen ergänzt werden kann.

Eine erfindungsgemäße Fördereinrichtung zum Fördern von beladenen oder unbeladenen Ladungsträgern weist eine erste Fördereinheit und eine zweite Fördereinheit auf. Jede der Fördereinheiten ist auf Bodenrollen verfahrbar. Die erste Fördereinheit ist relativ zu der zweiten Fördereinheit und unabhängig von der zweiten Fördereinheit bewegbar. Erfindungsgemäß weist die Fördereinrichtung eine Vorrichtung zur Bestimmung der Position und der Lage der ersten Fördereinheit relativ zu der zweiten Fördereinheit auf. Die Vorrichtung umfasst eine an der ersten Fördereinheit angeordnete Kamera sowie ein an der zweiten Fördereinheit angeordnetes Merkmal oder eine an der zweiten Fördereinheit angeordnete Merkmalskombination. Das Merkmal oder die Merkmalskombination weisen eine Erstreckung in Fahrrichtung und eine Erstreckung senkrecht zur Fahrrichtung auf. Die Erstreckungen sind für die Kamera erfassbar. Aufgrund der besonderen Ausgestaltung des Merkmals oder der Merkmalskombination kann es sich bei der Kamera kann es sich um eine einfache und robuste Ausführung handeln. Die Kamera kann die Erstreckung des Merkmals oder der Merkmalskombination in Fahrrichtung und senkrecht zur Fahrrichtung erfassen und aus diesen so gewonnenen Daten die Position und die Lage der beiden Fördereinheiten zueinander ermitteln.

Unter der Fahrrichtung wird eine Richtung verstanden, in der sich eine Fördereinrichtung bewegt. Aus der Kombination der Fahrrichtungen der ersten und der zweiten Fördereinheit ergibt sich die Förderrichtung der Fördereinrichtung.

Unter dem Begriff "Merkmal" handelt es sich um ein mit der Kamera, also optisch, erfassbares Objekt. Das Objekt kann beispielsweise auf der Oberfläche sichtbar sein, wie etwa durch eine farbliche Oberflächengestaltung durch beispielsweise eine Folie, einen Aufkleber oder einen Farbauftrag oder auch eine strukturelle Entsprechung an der Fördereinheit aufweisen. Beispielsweise kann es sich bei dem Objekt um eine Lichtprojektion, eine in oder auf der Oberfläche befindliche und für die Kamera sichtbare Zeichnung oder Bemalung, ein auf der Oberfläche aufgebrachtes Element wie etwa ein Aufkleber oder ein Schild oder eine an oder in dem Gehäuse der Fördereinheit befindliche Struktur handeln.

Unter dem Begriff "Merkmalskombination" wird eine Kombination aus zwei oder mehreren Merkmalen verstanden, die im Zusammenspiel eine Erstreckung in Fahrrichtung und senkrecht zur Fahrrichtung besitzen. Bei einer solchen Merkmalskombination kann es sich beispielsweise um zwei in Fahrrichtung und senkrecht zur Fahrrichtung versetzte, gewissermaßen diagonal angeordnete Punkte, zwei kreis- oder ellipsenförmige Strukturen oder um je eine in Fahrrichtung und senkrecht zur Fahrrichtung verlaufende gerade Struktur handeln. Selbstverständlich sind auch andere als die genannten Ausgestaltungen denkbar.

Unter dem Begriff "Position" wird eine Angabe des Orts einer Fördereinheit in einem kartesischen Koordinatensystem verstanden. Das Koordinatensystem kann beispielsweise ein absolutes Bezugssystem oder ein auf eine Fördereinheit bezogenes relatives Bezugssystem sein. Unter dem Begriff "Lage" wird die Orientierung einer Fördereinheit unter Angabe von Winkelgrößen verstanden. Die Lage einer ersten Fördereinheit kann beispielsweise unter Bezugnahme auf eine zweite Fördereinheit oder unter Verwendung eines absoluten Bezugssystems angegeben werden.

Es kann also anhand eines von der Kamera aufgenommenen Bildes eine Dimension des Merkmals oder der Merkmalskombination in Fahrrichtung und eine Dimension des Merkmals oder der Merkmalskombination senkrecht zur Fahrrichtung bestimmt werden. Die Erfassbarkeit sowohl der Dimension in Fahrrichtung als auch senkrecht zur Fahrrichtung ermöglicht eine Unterscheidung zwischen einer bloßen Abstandsveränderung zwischen der ersten und der zweiten Fördereinheit und einer Veränderung der Lage der ersten Fördereinheit relativ zu der zweiten Fördereinheit und ermöglicht damit beispielsweise eine genaue Parallelausrichtung der ersten Fördereinheit relativ zu der zweiten Fördereinheit bei gleichzeitiger Festlegung oder Ermittlung des Abstands der ersten Fördereinheit zu der zweiten Fördereinheit. Zudem kann eine relativ einfache Kamera zum Einsatz kommen, was eine kostengünstige und gleichzeitig robuste Ausführung ermöglicht.

Eine bevorzugte Ausführungsform der Fördereinrichtung sieht vor, dass die Kamera und das Merkmal oder die Merkmalskombination so an der ersten Fördereinheit und der zweiten Fördereinheit angeordnet sind, dass eine Kameraachse auf das Merkmal oder die Merkmalskombination ausgerichtet ist und die Kameraachse mit der Erstreckung des Merkmals oder der Merkmalskombination in Fahrrichtung einen Winkel ungleich 90°, bevorzugt zwischen 70° und 20°, besonders bevorzugt von 45° ± 15°, einschließt. Bei der Kameraachse handelt es sich um die optische Achse der Kamera. Es kann also entweder das Merkmal oder die Merkmalskombination im Wesentlichen parallel an der zweiten Fördereinheit angeordnet sein und die Kamera der ersten Fördereinheit schräg auf das Merkmal die Merkmalskombination ausgerichtet sein oder das Merkmal oder die Merkmalskombination ist schräg an der zweiten Fördereinheit angebracht und die an der ersten Fördereinheit angebrachte Kamera ist im Wesentlichen senkrecht auf die zweite Fördereinheit ausgerichtet. Selbstverständlich sind auch Lösungen denkbar, bei denen sowohl die Kamera als auch das Merkmal oder die Merkmalskombination schräg zu der jeweiligen Fördereinheit angeordnet sind und damit relativ zueinander die genannte Winkelbeziehung eingehen. Die Winkelbeziehung hat den Vorteil, dass eine Veränderung des Winkels zwischen dem Merkmal oder der Merkmalskombination und der Kamera eine vergleichsweise starke Veränderung der Erstreckung des Merkmals oder der Merkmalskombination in Fahrrichtung und damit eine hohe Empfindlichkeit gegen kleine Winkelveränderungen zur Folge hat.

Eine besonders bevorzugte Ausführungsform sieht vor, dass das Merkmal oder die Merkmalskombination strukturell sind. Unter dem Begriff "strukturell" wird vorliegend verstanden, dass das Merkmal in die Struktur der Fördereinheit, beispielsweise in das Gehäuse, integriert ist. Dies hat den Vorteil, dass das Merkmal oder die Merkmalskombination selbst bei einem hohen Verschmutzungsgrad oder verschleißbedingten Abnutzungserscheinungen gut für die Kamera erfassbar bleibt.

In diesem Zusammenhang kann vorgesehen sein, dass das Merkmal oder die Merkmalskombination Ausnehmungen, Erhebungen oder/und Kanten umfasst, insbesondere können die Ausnehmungen als Löcher oder/und Nuten ausgebildet sein.

Alternativ oder zusätzlich kann vorgesehen sein, dass das Merkmal oder die Merkmalskombination zumindest teilweise aus Licht bestehen. Das Licht kann beispielsweise an der Oberfläche erzeugbar sein, wie etwa durch diskrete Leuchtmittel wie etwa Leuchtdioden oder durch eine Anzeigetafel wie etwa eine Flüssigkristallanzeige. Alternativ oder zusätzlich kann das Licht auf die Oberfläche projiziert sein. Dazu kann in der ersten Fördereinheit beispielsweise eine Projektionsvorrichtung zur Projektion des Merkmals oder der Merkmalskombination von der ersten Fördereinheit auf die zweite Fördereinheit vorgesehen sein. Mittels eines projizierten Merkmals oder einer projizierten Merkmalskombination können zumindest ein Winkel, den die erste Fördereinheit mit der zweiten Fördereinheit einschließt und ein Abstand zwischen der ersten Fördereinheit und der zweiten Fördereinheit bestimmt werden. Gegebenenfalls kann ein Teil des Merkmals oder der Merkmalskombination strukturell und ein anderer Teil projiziert sein. Eine derartige Kombination kann neben der Bestimmung des Abstands zwischen der ersten Fördereinheit und der zweiten Fördereinheit auch eine Bestimmung eines Abstands entlang einer gemeinsamen Fahrrichtung der ersten Fördereinheit und der zweiten Fördereinheit ermöglichen. Beispielsweise kann der projizierte Teil des Merkmals oder der Merkmalskombination bei einer Veränderung der Relativposition der ersten Fördereinheit zu der zweiten Fördereinheit entlang der Fahrrichtung durch den strukturellen Teil des Merkmals der Merkmalskombination veränderbar sein. Dies kann beispielsweise eine Kante oder Stufe in dem Gehäuse der zweiten Fördereinheit sein, die bei einer Veränderung der Relativposition das Aussehen des projizierten Teils des Merkmals oder der Merkmalskombination verändert. Alternativ oder zusätzlich können auch die Reflexion des projizierten Teils des Merkmals oder der Merkmalskombination beeinflussende Oberflächeneigenschaften an der zweiten Fördereinheit vorgesehen sein, sodass eine Veränderung der Relativposition der ersten Fördereinheit zu der zweiten Fördereinheit auch eine veränderte Reflexion des produzierten Teils des Merkmals oder der Merkmalskombination hervorruft.

Bei einer Ausführungsform kann eine Steuereinrichtung vorgesehen sein, die dazu eingerichtet ist, zur Bestimmung der Position und der Lage der ersten Fördereinheit relativ zu der zweiten Fördereinheit die Länge der Erstreckung des Merkmals oder der Merkmalskombination in Fahrrichtung und senkrecht zur Fahrrichtung zu erfassen. Die gleichzeitige Erfassung der Erstreckung des Merkmals oder der Merkmalskombination in Fahrrichtung und senkrecht zur Fahrrichtung bietet die Möglichkeit, bei einer Veränderung der Erstreckung in Fahrrichtung zwischen einer Veränderung des Abstands zwischen der ersten Fördereinheit und der zweiten Fördereinheit - d.h., einer Veränderung der relativen Position - und einer Veränderung des Winkels zwischen der Erstreckung des Merkmals oder der Merkmalskombination in Fahrrichtung und der Kameraachse - d.h., einer Veränderung der relativen Lage - zu unterscheiden. Bei einer Veränderung des Abstands zwischen der ersten Fördereinheit und zweiten Fördereinheit verändern sich die Erstreckung des Merkmals oder der Merkmalskombination in Fahrrichtung und die Erstreckung des Merkmals oder der Merkmalskombination senkrecht zur Fahrrichtung um das gleiche Verhältnis. Bei einer Veränderung des Winkels hingegen verändert sich die Erstreckung in Fahrrichtung, hinsichtlich der Erstreckung senkrecht zur Fahrrichtung ergibt sich für verschiedene Abschnitte des Merkmals oder der Merkmalskombination entlang der Fahrrichtung eine unterschiedliche Veränderung.

Eine besonders bevorzugte Ausführungsform sieht vor, dass die Bestimmung der Position und der Lage das Bestimmen der Erstreckung des Merkmals oder der Merkmalskombination in Fahrrichtung und senkrecht zur Fahrrichtung in dem Kamerabild umfasst. Es wird also nicht die reale Erstreckung des Merkmals oder der Merkmalskombination in Fahrrichtung und senkrecht zur Fahrrichtung bestimmt, sondern lediglich die Erstreckung in dem Kamerabild. Dies ermöglicht eine weitgehend freie Festlegung beispielsweise der Grundstellung der Fördereinrichtung, d.h. eines gewünschten Abstands zwischen der ersten Fördereinheit und der zweiten Fördereinheit sowie einer gewünschten Winkelausrichtung der beiden Fördereinheiten zueinander, von der aus Veränderungen detektiert und gegebenenfalls korrigiert werden sollen.

In diesem Zusammenhang kann vorteilhafterweise vorgesehen sein, dass die Steuereinrichtung dazu eingerichtet ist, zur Bestimmung der Position und der Lage einen Kalibrierwert für die Kamera aufzunehmen. Bei dem Kalibrierwert kann es sich beispielsweise um einen Faktor handeln, der eine Beziehung zwischen den Abmessungen des Merkmals oder der Merkmalskombination in dem Kamerabild und in der Realität herstellt. Dies kann insbesondere von Interesse sein, wenn verschiedene Kameras verschieden große Abbilder des gleichen Merkmals oder der gleichen Merkmalskombination liefern.

Hierbei kann es von Vorteil sein, wenn die Steuereinrichtung dazu eingerichtet ist, die Länge der Erstreckung in Fahrrichtung und die Länge der Erstreckung des Merkmals oder der Merkmalskombination senkrecht zur Fahrrichtung mit Referenzwerten zu vergleichen. Bei den Referenzwerten kann es sich beispielsweise um in der Steuereinrichtung bei einem Referenzierungsvorgang abgespeicherte Bilddaten handeln. Dabei kann mit der in der ersten Fördereinheit angeordneten Kamera bei dem initialen Referenzierungsvorgang ein Bild des Merkmals an der zweiten Fördereinheit aufgenommen und als Referenzwert beispielsweise in der Steuereinrichtung abgespeichert sein. Alternativ oder zusätzlich können in der Steuereinrichtung als Referenzwert dienende Bilddaten hinterlegt werden. Auf diese Weise können beispielsweise zwei verschiedene erste Fördereinheiten die einmal aufgenommenen, der zweiten Fördereinheit zuzuordnende, Bilddaten aufgespielt bekommen und so mit der zweiten Fördereinheit zusammenarbeiten. Es müsse nicht unbedingt Bilddaten als Referenzwerte verwendet werden. Alternativ können auch nur die den Bilddaten zugehörigen Merkmals- oder Merkmalskombinationswerte abgespeichert oder hinterlegt werden.

Eine vorteilhafte Ausführungsform sieht vor, dass die Steuereinrichtung dazu eingerichtet ist, zur Bestimmung der Position der beiden Fördereinheiten zueinander eine Bestimmung des Abstands der beiden Fördereinheiten zueinander, einer relativen Position der beiden Fördereinheiten entlang einer Förderrichtung oder/und eines Winkels beispielsweise von Längserstreckungen der Fördereinheiten umfasst.

Die Erfindung wird nun unter Bezugnahme auf die Zeichnungen näher erläutert. Es zeigen:

Figur 1      eine schematische Seitenansicht einer Fördereinheit einer Ausführungsform einer erfindungsgemäßen Fördereinrichtung;

Figuren 2A, 2B      eine schematische Draufsicht auf die Fördereinrichtung der Figur 1 in einer Grundstellung sowie ein zugehöriges Kamerabild;

Figuren 3A, 3B      eine schematische Draufsicht auf die Fördereinrichtung der Figur 1 in einer parallel verschobenen Stellung der beiden Fördereinheiten sowie ein zugehöriges Kamerabild;

Figuren 4A, 4B      eine schematische Draufsicht auf die Fördereinrichtung der Figur 1 in einer Stellung mit einem verringerten Abstand zwischen den beiden Fördereinheiten sowie ein zugehöriges Kamerabild;

Figuren 5A, 5B      eine schematische Draufsicht auf die Fördereinrichtung der Figur 1 in einer Stellung mit einer veränderten Ausrichtung der beiden Fördereinheiten sowie ein zugehöriges Kamerabild;

Figuren 6A, 6B      eine schematische Draufsicht auf die Fördereinrichtung der Figur 1 in einer Stellung mit einer veränderten Ausrichtung der beiden Fördereinheiten sowie ein zugehöriges Kamerabild;

Figuren 7A, 7B      eine schematische Draufsicht auf eine erfindungsgemäße Fördereinheit mit einer Projektionsvorrichtung; und

Figuren 8A-8F      verschiedene Ausführungsformen eines Merkmals einer Fördereinheit.

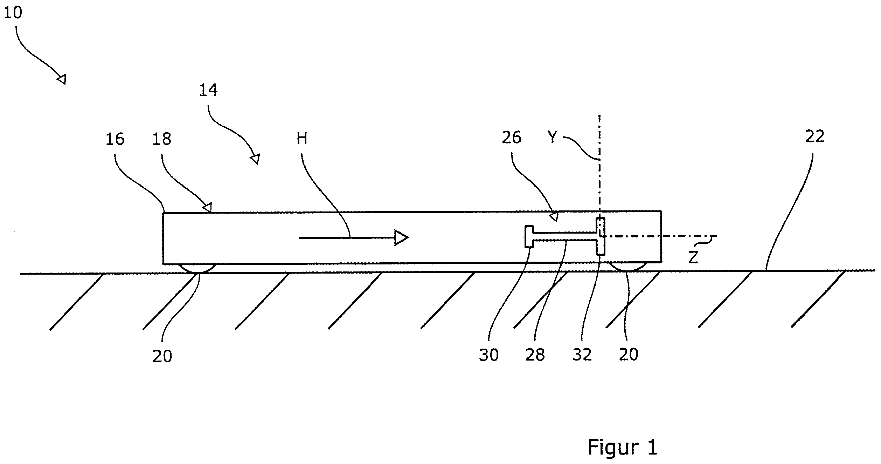

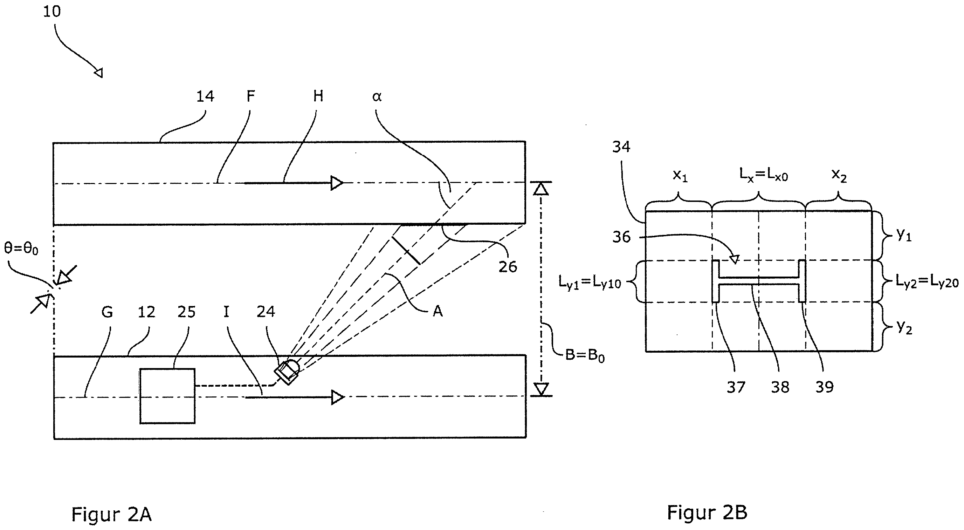

Die Figuren 1 und 2A zeigen eine Fördereinrichtung 10 mit einer ersten Fördereinheit 12 und einer zweiten Fördereinheit 14. Die Fördereinheiten 12, 14 sind lediglich schematisch dargestellt und können je nach Anwendungszweck in ihren Dimensionen und Gehäuseformen angepasst werden. Eine mögliche Ausführungsform sieht die Ausbildung nach Art von Förderkufen mit einer Außenkontur vor, wie sie beispielsweise eine Gabelzinke eines Gabelstaplers aufweist. Mittels der Fördereinrichtung 10 können beladene oder unbeladene Ladungsträger wie beispielsweise Euro-Paletten gefördert werden. Die Fördereinheiten 12, 14 kommunizieren in an sich bekannter Weise miteinander und/oder mit einer nicht eigens gezeigten Zentralsteuerung, welche den Förderprozess koordiniert.

Wie in Figur 1 und 2 beispielhaft anhand der Fördereinheit 14 gezeigt, weisen die Fördereinheiten 12, 14 ein Gehäuse 16 mit einer Tragseite 18 sowie ein Fahrwerk auf, das auf Bodenrollen 20 auf einem Untergrund 22 verfahren werden kann. Die Fördereinheiten 12, 14 sind so ausgebildet, dass die Tragseite 18 gegenüber dem Untergrund 22 angehoben und abgesenkt werden kann. Wenn die Fördereinheiten 12, 14 eine abgesenkte Stellung einnehmen, befindet sich die Fördereinrichtung 10 in einer Leerkonfiguration und kann einen Ladungsträger unterfahren. Unter einem Ladungsträger befindlich kann die Fördereinrichtung 10 die Tragseiten 18 der Fördereinheiten 12, 14 anheben und somit den Ladungsträger aufnehmen, fördern und wieder absetzen.

Wie in Figur 2A gezeigt weisen die beiden Fördereinheiten 12, 14 jeweils Längsachsen F, G sowie Fahrrichtungen H, I auf. Bei einer geradlinigen Fortbewegung der Fördereinheiten 12, 14 fallen die Längsachsen F, G mit der jeweiligen Fahrrichtung H, I der Fördereinheit 12, 14 zusammen. Die Fördereinheiten 12, 14 der Fördereinrichtung 10 sind vorliegend mit einer Vorrichtung zur Bestimmung der Position und der Lage der ersten Fördereinheit 12 relativ zu der zweiten Fördereinheit 14 ausgestattet. Die Vorrichtung umfasst eine Kamera 24 an der ersten Fördereinheit 12 sowie ein Merkmal 26 an der zweiten Fördereinheit 14.

Das Merkmal 26 an der zweiten Fördereinheit 14 besteht beispielhaft aus einer H-förmigen Grundform und weist einen Abschnitt 28 in Fahrrichtung H, einen kürzeren Abschnitt 30 senkrecht zur Fahrrichtung H sowie einen längeren Abschnitt 32, ebenfalls senkrecht zur Fahrrichtung H, auf. Der Abschnitt 28 in Fahrrichtung H erstreckt sich entlang einer Achse Z, die Abschnitte 30, 32 senkrecht zur Fahrrichtung H erstrecken sich parallel zu einer Achse Y. In der gezeigten Ausführungsform der Fördereinrichtung 10 ist das Merkmal 26 in der Nähe eines Endes der zweiten Fördereinheit 14 angeordnet.

Wie in Figur 2A ersichtlich weist die erste Fördereinheit 12 eine Kamera 24 auf, die mit einer Steuereinrichtung 25 verbunden ist. Die Steuereinrichtung kann wie in Figur 2A gezeigt in einer der beiden Fördereinheiten 12, 14, beispielsweise der ersten Fördereinheit 12, angeordnet sein. Alternativ kann die Steuereinrichtung 25 aber auch Teil einer (nicht gezeigten) zentralen Steuereinrichtung sein. Die Übertragung der Kamerasignale zu einer zentralen Steuereinrichtung könnte beispielsweise drahtlos erfolgen.

Die Anordnung von Kamera 24 und Merkmal 26 kann, wie in Figur 2A gezeigt, auf eine erste Fördereinheit 12 und eine zweite Fördereinheit 14 aufgeteilt sein, d.h. die erste Fördereinheit 12 trägt die Kamera 24 und die zweite Fördereinheit 14 trägt das Merkmal 26. Alternativ kann aber auch jede Fördereinheit 12, 14 sowohl eine Kamera 24 als auch ein Merkmal 26 tragen. Es könnten dabei sowohl Kamera 24 als auch Merkmal 26 auf der gleichen Seite des Gehäuses 16 angeordnet sein. Dies würde einen gleichzeitigen Einsatz zweier Kameras und entsprechender gegenüberliegender Merkmale erlauben. Es könnten aber auch Kamera und Merkmal auf zwei verschiedenen Seiten des Gehäuses 16 der Fördereinheit vorgesehen sein. Dies würde die Herstellung identischer Fördereinheiten ermöglichen, die je nach gegenseitiger Stellung mal als kameratragende Fördereinheit und mal als kennzeichentragende Fördereinheit fungieren. Es wäre auf diese Weise auch möglich, ad hoc mehr als zwei Fördereinheiten parallel zu koppeln, sofern die entsprechenden Steueralgorithmen vorhanden sind.

Bei dem Zusammenspiel der ersten Fördereinheit 12 und der zweiten Fördereinheit 14 kann beispielsweise vorgesehen sein, dass die erste Fördereinheit 12 als bestimmende Fördereinheit fungiert und die zweite Fördereinheit 14 der ersten untergeordnet ist und das Fahrverhalten der zweiten Fördereinheit 14 durch die erste Fördereinheit 12 vorgegeben wird.

Die Kamera 24 ist in der gezeigten Ausführungsform 10 in etwa mittig an der ersten Fördereinheit 12 angebracht und so auf das Merkmal 26 der zweiten Fördereinheit 14 ausgerichtet, dass eine Kameraachse A, welche die optische Achse der Kamera 24 darstellt, mit der Achse Z einen Winkel $\alpha$ von ca. 45° einschließt. Sowohl die Anordnung des Merkmals 26 an der zweiten Fördereinheit 14 als auch der Kamera 24 an der ersten Fördereinheit 12 sind von der jeweiligen Einsatzart und Ausgestaltung der Fördereinrichtung 10 abhängig. Beispielsweise kann das Merkmal 26 mittig und die Kamera 24 an einem Ende angeordnet sein. Es ist auch denkbar, sowohl die Kamera 24 als auch das Merkmal 26 mittig oder endständig anzuordnen. Dazu kann das Merkmal 26 so in das Gehäuse 16 der zweiten Fördereinheit 14 integriert sein, dass sich die gewinkelte Anordnung zwischen Merkmal 26 und Kamera 24 auch bei einer direkt gegenüberliegenden Anordnung von Kamera 24 und Merkmal 26 ergibt.

Des Weiteren sind in Figur 2A ein Abstand $B$ der beiden Fördereinheiten 12, 14 als Abstand der Mittenachsen F, G der beiden Fördereinheiten 12, 14 und ein Horizontalversatz $\theta$ definiert. In der gezeigten Ausgangstellung beträgt der Abstand $B = B_0$, der Horizontalversatz beträgt $\theta_0 = 0$. Es ist auch möglich, einen Referenz-Horizontalversatz $\theta_0$ ungleich Null zu wählen.

Figur 2B zeigt ein Kamerabild 34 der Kamera 24, wie es sich aus der in Figur 2A gezeigten Anordnung ergibt. Das Kamerabild 34 zeigt ein Abbild 36 des Merkmals 26, wie es in der in Figur 2A gezeigten Ausgangsstellung auf einem Kamerasensor der Kamera 34 entsteht und über die Steuereinrichtung 25 erfasst und gegebenenfalls weiterverarbeitet wird. Das Abbild 36 weist eine horizontale Pixelanzahl $P_x$ und vertikale Pixelanzahlen $P_{y1}$ und $P_{y2}$ auf, denen sich eine Erstreckung $L_x$ in Fahrrichtung H und Erstreckungen $L_{y1}$ und $L_{y2}$ senkrecht zur Fahrrichtung H zuordnen lassen. Die Erstreckung $L_x$ in Fahrrichtung H entspricht dabei im Wesentlichen der Länge des Abschnitts 28 des Merkmals 26 wie in Figur 1 gezeigt. Im in Figur 2B gezeigten Abbild 36 ist dieser Abschnitt als waagrechter Abschnitt 38 gekennzeichnet. Die Erstreckung $L_{y1}$ senkrecht zur Fahrrichtung entspricht der Länge des Abschnitts 30 des Merkmals 26 (siehe Figur 1) und ist im Abbild 36 als Abschnitt 37 gekennzeichnet. Die Erstreckung $L_{y2}$ entspricht der Länge des Abschnitts 32 des Merkmals 26 (siehe Figur 1) und ist im Abbild 36 als Abschnitt 39 gekennzeichnet. Es ist hier ersichtlich, dass sich die unterschiedlichen Längen der Abschnitte 30, 32 des Merkmals 26 in gleiche Längen der Abschnitte 37, 38 des Abbilds 36 transformieren. Das Vorhandensein gleicher Längen bei den Abschnitten 37, 39 des Abbilds 36 ist aber nicht notwendig, sondern veranschaulicht lediglich den Transformationsvorgang.

Das Abbild 36 befindet sich innerhalb des Kamerabilds 34 an einer Position, die sich durch Abstände $x_1$, $x_2$, $y_1$ und $y_2$ bestimmen lässt. Die in Figur 2A gezeigte Ausgangsstellung ergibt das in Figur 2B gezeigte Referenz- oder Kontrollbild 34, das sich durch folgende Beziehungen charakterisieren lässt:

$$P_x \rightarrow L_x;\ P_y \rightarrow L_y$$

$$y_1 = y_2;\ x_1 = x_2$$

$$L_{y10} = L_{y20}$$

$$L_{x0} = 2L_{y10} = 2L_{y20} \Rightarrow Q_0 := \frac{L_{x0}}{L_{y10}} = \frac{L_{x0}}{L_{y20}} = 2$$

Die in Figur 2B vorliegende Relation $L_{x0} = 2L_{y10} = 2L_{y20}$ ist willkürlich gewählt und nur als Ausführungsbeispiel zu verstehen. Die Wahl einer zweifachen Breite $L_{x0}$ des Merkmals verglichen mit seinen Höhen kann selbstverständlich an den jeweiligen Einsatzfall und die entsprechenden Gegebenheiten angepasst werden. Gleiches gilt für die Beziehung $L_{y10} = L_{y20}$, wie bereits oben erläutert. Auch muss bei dem Referenzbild nicht unbedingt eine mittige Positionierung gemäß $y_1 = y_2$; $x_1 = x_2$ vorliegen. Selbstverständlich sind hier auch andere Beziehungen möglich, die Gleichheit symbolisiert lediglich den idealen Ausgangszustand.

Diese Werte und Beziehungen geben die Tatsache wider, dass beide Fördereinheiten 12, 14 parallel zueinander ausgerichtet sind, einen Ausgangsabstand $B_0$ aufweisen und ein Horizontalversatz $\theta_0$ gleich Null ist. Der Quotient $Q_{1/2}$ = $L_x/L_{y1/2}$ stellt ein Kriterium für die Parallelität der beiden Fördereinheiten 12, 14 dar. Eine Abweichung eines oder beider Quotienten $Q_{1/2}$ von dem Wert $Q_0$ kennzeichnet eine Verwinkelung der Achsen F, G der beiden Fördereinheiten 12 ,14 relativ zueinander.

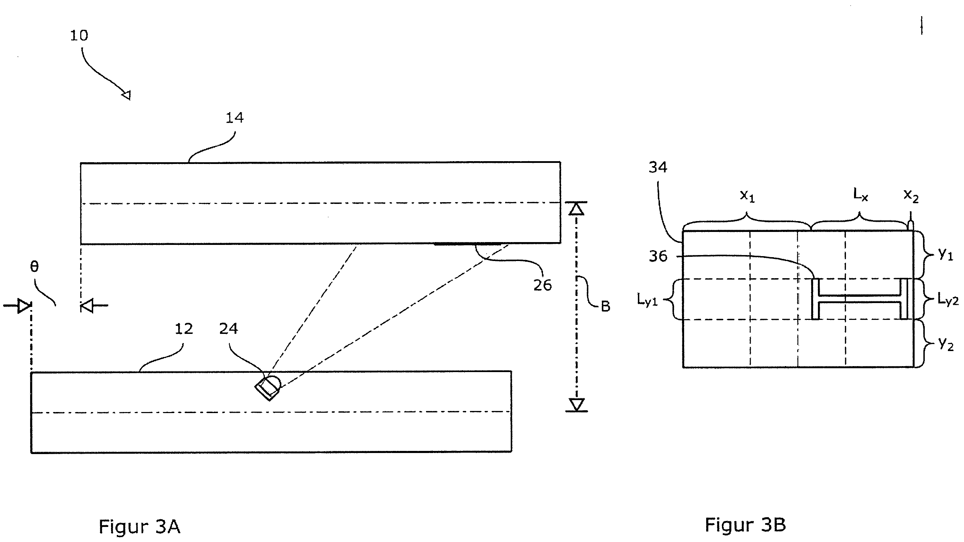

In den Figuren 3A und 3B ist eine Stellung gezeigt, die sich von der in der Figur 2A gezeigten Ausgangsstellung unterscheidet. Bei der in Figur 3A dargestellten Stellung der beiden Fördereinheiten 12, 14 besteht nach wie vor eine Parallelausrichtung der beiden Fördereinheiten 12, 14, auch ist der Abstand B der beiden Fördereinheiten 12, 14 nach wie vor $B_0$. Der Horizontalversatz $\theta$ hingegen ist nun ungleich dem Referenzwert $\theta_0$, insbesondere ist $\theta > 0$. Eine solche Situation kann sich beispielsweise bei einer Annäherung der ersten Fördereinheit 12 an die zweite Fördereinheit 14 ergeben. In dem Kamerabild 34 bildet sich die Stellung der beiden Fördereinheiten 12, 14 wie folgt ab: Die Dimension $L_x$ ist unverändert: $L_x = L_{x0}$. Die Lage des Abbilds 36 hingegen hat sich verändert: Es gilt $x_1 \neq x_2$, insbesondere gilt $x_1 > x_2$. Der gleichgebliebene Abstand B zeigt sich an $L_{y1/2} = L_{y10} = L_{y20}$, die gleichgebliebene Parallelität an $Q_{1/2} = Q_0$. Es kann also mithilfe der Kamera 34 anhand eines vorher bestimmten Ausgangs- oder Referenzbildes der Abstand der beiden Fördereinheiten 12, 14 entlang einer Fahrrichtung H, I anhand einer horizontalen Verschiebung des Abbilds 36 bestimmt werden. Analog könnte auch eine Anhebung oder Absenkung der zweiten Fahreinheit 14 gegenüber der ersten Fahreinheit 12 anhand einer vertikalen Verschiebung des Kamerabilds 36 bestimmt werden. Selbstverständlich können auch beliebige Überlagerungen der genannten beiden Bewegungen anhand entsprechender Verschiebungen des Abbilds 36 im Kamerabild 34 bestimmt werden.

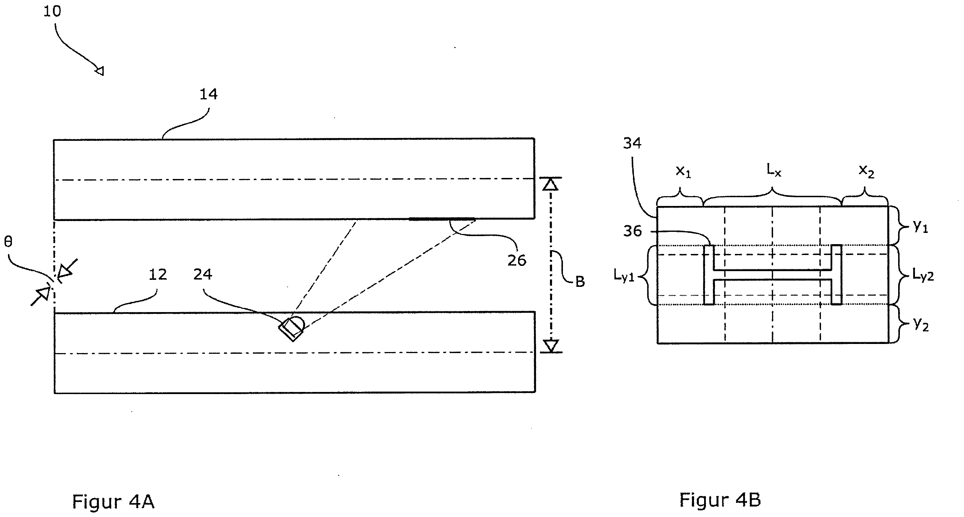

Bei der in den Figuren 4A und 4B gezeigten Stellung der beiden Fördereinheiten 12, 14 besteht nach wie vor eine Parallelausrichtung, d.h. $Q_{1/2} = Q_0$. Für die Relativposition der beiden Fördereinheiten 12, 14 gilt $\theta = \theta_0 = 0$. Folglich befindet sich das Abbild 36 unverschoben im Kamerabild 36. Allerdings gilt für den Abstand B der beiden Fördereinheiten: $B \neq B_0$, insbesondere gilt $B < B_0$. Der Abstand der beiden Fördereinheiten 12, 14 hat sich also verringert. Dies bildet sich in dem in Figur 4B dargestellten Kamerabild 34 als in horizontaler und vertikaler Richtung vergrößertes Abbild 36 des Merkmals 26 ab: $L_x > L_{x0}$; $L_{y1} > L_{y10}$; $L_{y2} > L_{y20}$. Es kann also anhand des Kamerabildes der relative Abstand der beiden Fördereinheiten 12, 14 zueinander im Verhältnis zu einer vorher bestimmten Ausgangs- oder Relativposition anhand einer unverzerrten Vergrößerung des Abbilds 36 im Kamerabild 34 bestimmt werden.

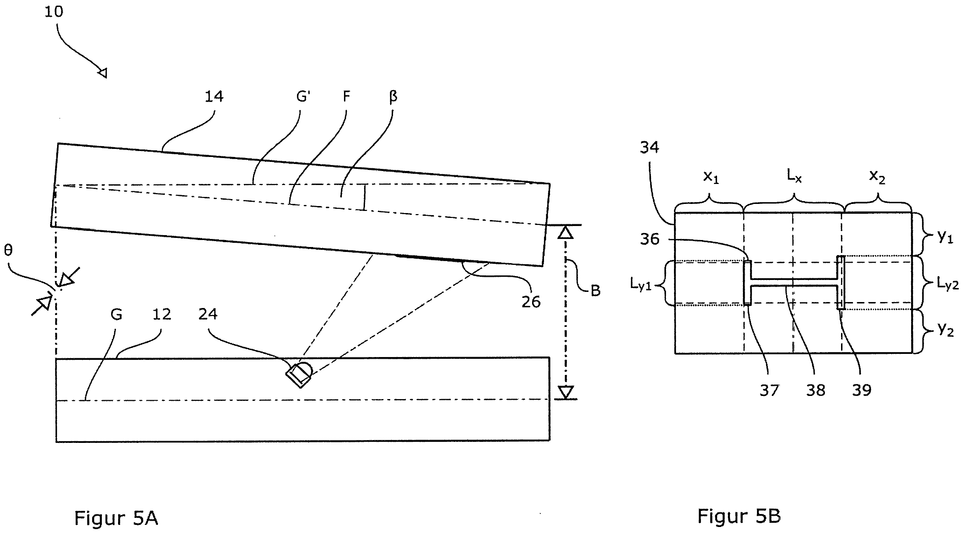

In Figur 5A ist eine Stellung der beiden Fördereinheiten 12, 14 gezeigt, in der sowohl eine Winkelabweichung der beiden Längsachsen F, G der Fördereinheiten 12, 14 verglichen mit der in Figur 2A gezeigten Ausgangs- oder Referenzstellung als auch eine Verringerung des Abstands der beiden Fördereinheiten 12, 14 zueinander stattgefunden hat. In der Figur 5A ist zur Veranschaulichung ein Winkel $\beta$ zwischen der Längsachse F der zweiten Fördereinheit 14 und einer parallel zur Längsachse G der ersten Fördereinheit gezeichneten Achse G' definiert. Der gezeigte Fall $\beta \neq 0$, insbesondere hier $\beta < 0$, zeigt sich in dem in Figur 5B dargestellten Kamerabild 34 der Kamera 24 wie folgt: $L_x > L_{x0}$; $L_{y1} > L_{y10}$; $L_{y2} > L_{y20}$. Insbesondere ist die Veränderung der Längen $Ly_{1/2}$ der Abbilder 37, 39 der beiden senkrecht zur Fahrrichtung H angeordneten Abschnitte 30, 32 unterschiedlich. Es gilt demnach für die Quotienten $Q_{1/2}$: $Q_{1/2} < Q_0$. Insbesondere unterscheidet sich der Quotient $Q_1 = L_x/L_{y1}$ für die Länge des Abschnitts 37 des Abbilds 36 von dem Quotienten $Q_2 = L_x/L_{y2}$, es gilt: $Q_1 > Q_2$.. Es kann also anhand der Veränderungen der absoluten Längeneinheiten $L_x$, $L_{y1/2}$ des Abbilds 36 des Merkmals 26 auf eine Veränderung des Abstandes der beiden Fördereinheiten 12, 14 und mittels der Quotienten $Q_{1/2}$ auf eine mögliche Veränderung des Winkels $\beta$ geschlossen werden, den die beiden Längsachsen F, G der beiden Fahreinheiten 12, 14 einschließen.

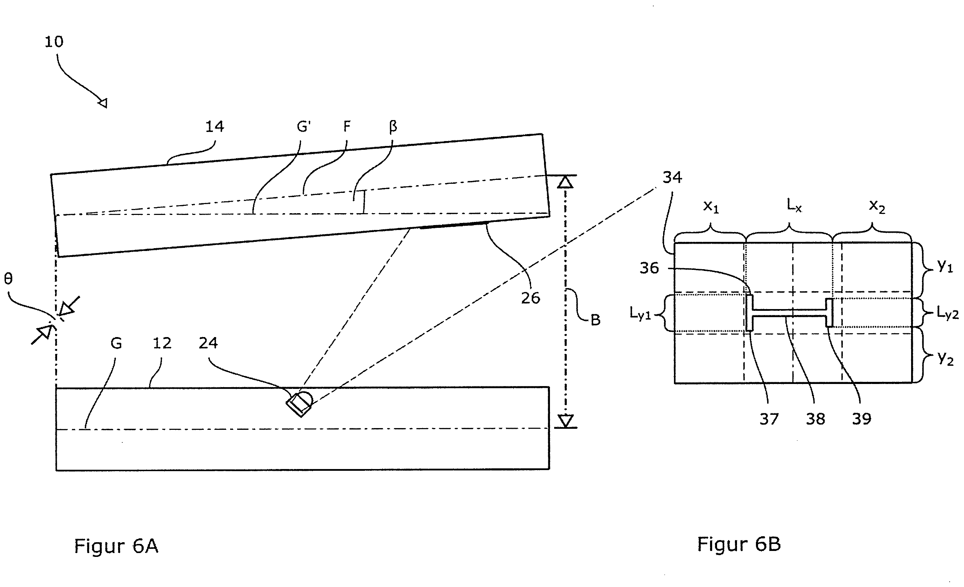

In Figur 6A ist eine zu Figur 5A vergleichbare Stellung der beiden Fördereinheiten 12, 14 gezeigt, allerding hat eine Veränderung des Winkels zwischen der beiden Fördereinheiten 12, 14 mit umgekehrten Vorzeichen stattgefunden. Es gilt: $\beta > 0$, folglich ergibt sich: $L_x < L_{x0}$; $L_{y1} < L_{y10}$; $L_{y2} < L_{y20}$. Gleichzeitig gilt für die Quotienten $Q_{1/2}$: $Q_{1/2} > Q_0$

insbesondere gilt: $Q_1 = \dfrac{L_x}{L_{y1}} < \dfrac{L_x}{L_{y2}} = Q_2$ . Es kann also anhand der Veränderungen der Längenabmessungen des Merkmalsbildes 36 die Richtung der Winkelveränderung ermittelt werden.

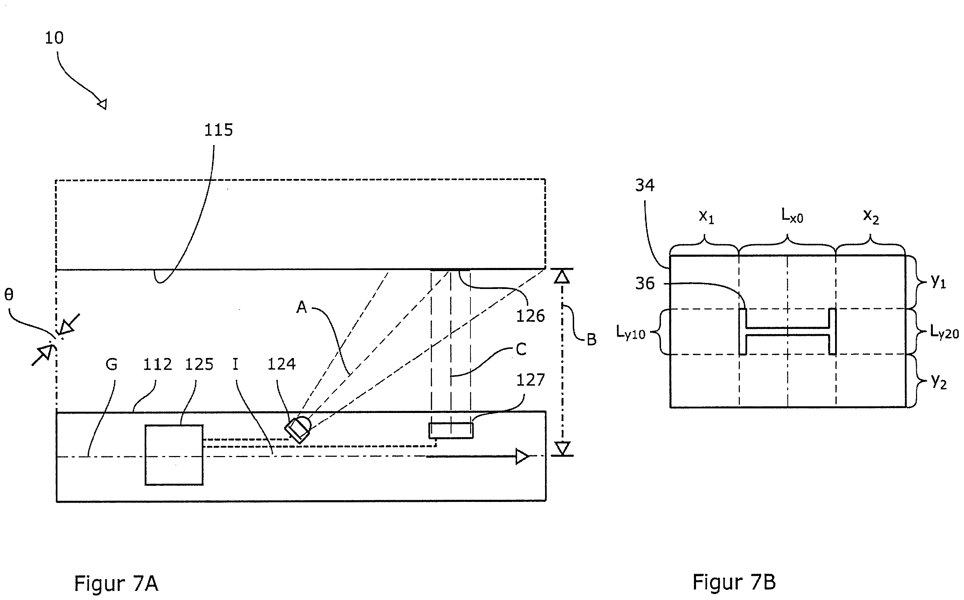

Die Figuren 7A und 7B zeigen eine Ausführungsform einer Fördereinheit 112. Ähnliche oder vergleichbare Eigenschaften der Ausführungsform werden mit um 100 erhöhte Bezugzeichen bezeichnet. Die Fördereinheit 112 kann, wie auch die vorstehend beschriebenen Fördereinheiten 12, 14 mit einer weiteren Fördereinheit zu einer Fördereinrichtung gekoppelt werden. Die Fördereinheit 112 weist neben den bereits vorstehend beschriebenen Eigenschaften wie beispielsweise Gehäuse, Rollen, Steuereinrichtung 125 und Kamera 124 zusätzlich einen Projektor 127 auf. Der Projektor 127 ist dazu ausgelegt, in die Umgebung der Fördereinheit 112 ein Merkmal 216 entlang einer Projektionsachse C zu projizieren. Die Projektionsachse C kann dabei vorteilhafterweise in einer Ebene mit der Kameraachse A liegen. Die Projektion kann dabei ein Abbildungsvorgang zur Erzeugung des Merkmals 126 sein und damit ein prinzipiell divergentes Strahlenbündel aussenden. Es kann sich beispielsweise auch um einen Scanvorgang eines einzelnen Lichtpunktes handeln, bei dem der Lichtpunkt entlang einer vorgegebenen Spur über die Oberfläche geführt wird, auf die er auftrifft. Es kann sich auch mehrere, das Merkmal 126 aufbauende, und zueinander parallel geführte Lichtstrahlen handeln, wie dies in Figur 7A schematisch skizziert ist.

Das Merkmal 126 wird mittels des Projektors 127 auf eine Oberfläche 115 projiziert. Bei der Oberfläche kann es sich um ein Gehäuse einer benachbarten Fördereinheit, also um eine bewegliche Oberfläche, handeln. Es kann sich bei der Oberfläche 115 auch um eine Wand, also eine feststehende Oberfläche, handeln, relativ zu der die Fördereinheit 112 navigiert werden soll.

Eine Veränderung eines Abstandes B der Fördereinheit 112 von der Oberfläche 115 kann einen Einfluss auf die Größe des Merkmals 126 haben. Bei einer Parallelprojektion wie in Figur 7A gezeigt bleibt die Größe des Merkmals 126 auf der Oberfläche 115. Bei einem Abbildungsvorgang vergrößert sich das Merkmal 126 selbst auf der Oberfläche mit zunehmendem Abstand B. Zusätzlich verkleinert ein zunehmender Abstand B das Bild 36 des Merkmals 126, wie dies bereits oben unter Bezugnahme auf die Figuren 4A-6B erläutert wurde. Mittels einer geeigneten Wahl des Objektivs der Kamera 124 und einer geeigneten Divergenz der Projektion kann auch hier aus der Größe des Abbilds 36 wie in Figur 7B gezeigt der Abstand B sowie ein geänderter Winkel zwischen der Oberfläche 115 und der Fördereinheit 112 ermittelt werden.

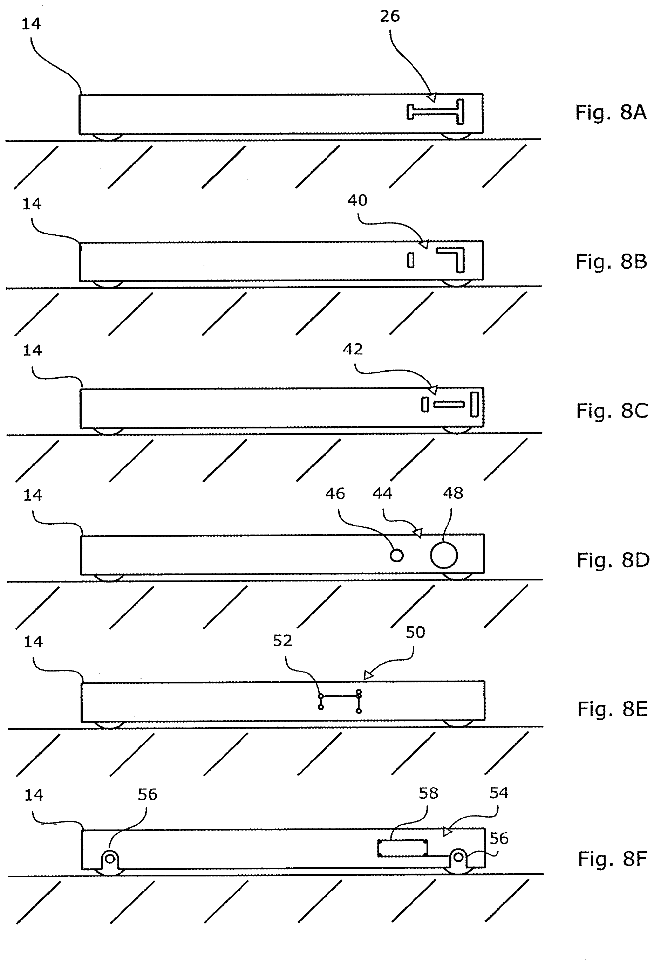

Die Figuren 8A-F zeigen verschiedene Ausprägungen des zu erfassenden Merkmals an der zweiten Fördereinheit 14.

In Figur 8A ist das bereits in Figur 1 gezeigte Merkmal 26 dargestellt. Besonders vorteilhaft hat sich bei der Ausgestaltung des Merkmals 24 der Figuren 1 und 8A die ungleiche Höhe der Abschnitte 30, 32 senkrecht zur Fahrrichtung herausgestellt. Die Länge dieser Abschnitte ist so gewählt, dass das Abbild 36 des Merkmals 26 bei der "idealen" Ausgangs- oder Referenzstellung für die beiden Abschnitte senkrecht zur Fahrrichtung eine gleiche Länge zeigt.

In den Figuren 8B und 8C sind ähnliche Merkmale gezeigt. Im Unterschied zu dem Merkmal 26 der Figur 8A sind die Merkmale der Figuren 8B und 8C nicht zusammenhängend, sondern setzen sich aus voneinander getrennten Teilen zusammen und bilden somit eine Merkmalskombination. Die Merkmalskombination 40 der Figur 8B ist zweigeteilt, die Merkmalskombination 42 der Figur 8C ist dreigeteilt.

Gleiches gilt für die Merkmale der Figuren 8D und 8E. Hier sind die Merkmalsbestandteile der gezeigten Merkmalskombinationen als kreisförmige Ausnehmungen in dem Gehäuse 16 der Fördereinheit 14 ausgebildet. In Figur 8D sieht die Merkmalskombination 44 zwei kreisförmige Ausnehmungen 46, 48 vor. Die Erstreckung der Merkmalskombination senkrecht zur Fahrrichtung wird hierbei durch den Durchmesser der Ausnehmungen 46, 48, die Erstreckung in Fahrrichtung ebenfalls durch den Durchmesser, aber auch durch die Position der Ausnehmungen 46, 48 realisiert. In Figur 8E hingegen werden die Erstreckungen der Merkmalskombination 50 in Fahrrichtung und senkrecht zur Fahrrichtung ausschließlich durch die Position von Ausnehmungen 52, die beispielsweise als Bohrungen ausgestaltet sein können, bestimmt.

Bei der in Figur 8F gezeigten Ausführungsform werden ohnehin vorhandene Merkmale des Gehäuses wie beispielsweise ein Radausschnitt 56 oder/und ein Wartungszugang 58 als Merkmalskombination 54 genützt.

## Patentansprüche

1. Fördereinrichtung (10) zum Fördern von beladenen oder unbeladenen Ladungsträgern, mit

a) einer ersten Fördereinheit (12) und einer zweiten Fördereinheit (14), wobei jede Fördereinheit (12, 14) auf Bodenrollen (20) verfahrbar ist und die erste Fördereinheit (12) und die zweite Fördereinheit (14) relativ zueinander und voneinander unabhängig entlang einer jeweiligen Fahrrichtung (H, I) bewegbar sind, **dadurch gekennzeichnet, dass** die Fördereinrichtung
b) eine Vorrichtung zur Bestimmung der Position und der Lage der ersten Fördereinheit (12) relativ zu der zweiten Fördereinheit (14) aufweist, mit

i) einer an der ersten Fördereinheit (12) angeordneten Kamera (24),
ii) einem an der zweiten Fördereinheit (14) angeordneten Merkmal (26) oder einer an der zweiten Fördereinheit (14) angeordneten Merkmalskombination (42, 44, 50, 54), wobei das Merkmal oder die Merkmalskombination eine Erstreckung in Fahrrichtung (Z) und eine Erstreckung senkrecht zu der Fahrrichtung (Y) aufweist, wobei die Erstreckungen für die Kamera (24) erfassbar sind.

2. Fördereinrichtung nach Anspruch 1, wobei eine Fördereinheit dazu eingerichtet ist, mittels des erfassten Bildes zumindest einen Abstand der Fördereinheit und einen Winkel zwischen der Fördereinheit und der Erstreckung des Merkmals in Fahrrichtung zu ermitteln.

3. Fördereinrichtung nach Anspruch 1 oder 2, wobei die Kamera (24) und das Merkmal (26) oder die Merkmalskombination (42, 44, 50, 54) so an der ersten Fördereinheit (12) und der zweiten Fördereinheit (14) angeordnet sind, dass eine Kameraachse (A) auf das Merkmal (26) oder die Merkmalskombination (42, 44, 50, 54) ausgerichtet ist und die Kameraachse (A) mit der Erstreckung in Fahrrichtung (Z) des Merkmals (26) oder der Merkmalskombination (42, 44, 50, 54) einen Winkel ($\alpha$) ungleich 90°, bevorzugt zwischen 70° und 20°, besonders bevorzugt von 45° $\pm$ 15°, einschließt.

4. Fördereinrichtung nach Anspruch 1 bis 3 wobei das Merkmal oder die Merkmalskombination strukturell und/oder aufgeklebt und/oder aufgemalt sind.

5. Fördereinrichtung nach Anspruch 1 bis 4, wobei eine Fördereinheit eine Projektionsvorrichtung zur Projektion des Merkmals oder der Merkmalskombination von der Fördereinheit auf eine Oberfläche einer Fördereinheit aufweist.

6. Fördereinrichtung nach einem der Ansprüche 1 bis 4, wobei das Merkmal oder die Merkmalskombination Ausnehmungen, Erhebungen oder/und Kanten umfasst.

7. Fördereinrichtung nach Anspruch 6, wobei die Ausnehmungen Löcher oder/und Nuten umfassen.

8. Fördereinrichtung nach einem der Ansprüche 1 bis 7, wobei das Merkmal oder die Merkmalskombination zumindest teilweise aus Licht bestehen.

9. Fördereinrichtung nach einem der Ansprüche 1 bis 8, mit einer Steuereinrichtung (25), die dazu eingerichtet ist, zur Bestimmung der Position und der Lage der ersten Fördereinheit (12) relativ zu der zweiten Fördereinheit (14) die Länge der Erstreckungen (Z, Y) des Merkmals oder der Merkmalskombination zu erfassen.

10. Fördereinrichtung nach Anspruch 9, wobei die Bestimmung der Position und der Lage das Bestimmen der Erstreckungen des Merkmals oder der Merkmalskombination in einem Kamerabild (34) umfasst.

11. Fördereinrichtung nach einem der Ansprüche 9 oder 10, wobei die Steuereinrichtung (25) dazu eingerichtet ist, zur Bestimmung der Position und der Lage einen Kalibrierwert für die Kamera (24) aufzunehmen.

12. Fördereinrichtung nach einem der Ansprüche 9 bis 11, wobei die Steuereinrichtung (25) dazu eingerichtet ist, die Länge der Erstreckung in Fahrrichtung (Z) und der Länge der Erstreckung senkrecht zur Fahrrichtung (Y) des Merkmals oder der Merkmalskombination mit Referenzwerten zu vergleichen.

13. Fördereinrichtung nach einem der Ansprüche 9 bis 12, wobei die Steuereinrichtung (25) dazu eingerichtet ist, zur Bestimmung der Position der beiden Fördereinheiten (12, 14) zueinander eine Bestimmung des Abstands der beiden Fördereinheiten (12, 14) zueinander, einer relativen Position der beiden Fördereinheiten (12, 14) entlang einer Förderrichtung oder/und eines Winkels der Fördereinheiten (12, 14) umfasst.

## Claims

1. A conveying apparatus (10) for conveying laden or unladen load carriers, having

a) a first conveying unit (12) and a second conveying unit (14), wherein each conveying unit (12, 14) is displaceable on ground-level rollers (20), and the first conveying unit (12) and the second conveying unit (14) are movable relative to one another and independently of one another along a respective direction of travel (H, I), **characterized in that** the conveying apparatus
b) comprises a device for determining the position and the location of the first conveying unit (12) relative to the second conveying unit (14), having

i) a camera (24) arranged at the first conveying unit (12),
ii) a feature (26) arranged at the second conveying unit (14) or a feature combination (42, 44, 50, 54) arranged at the second conveying unit (14), wherein the feature or the feature combination has an extent in the direction of travel (Z) and an extent perpendicular to the direction of travel (Y), wherein the extents are capturable by the camera (24).

2. The conveying apparatus as claimed in claim 1, wherein a conveying unit is set up to ascertain at least a distance of the conveying unit and an angle between the conveying unit and the extent of the feature in the direction of travel on the basis of the captured image.

3. The conveying apparatus as claimed in claim 1 or 2, wherein the camera (24) and the feature (26) or the feature combination (42, 44, 50, 54) are arranged at the first conveying unit (12) and the second conveying unit (14) in a manner such that a camera axis (A) is aligned with the feature (26) or the feature combination (42, 44, 50, 54), and the camera axis (A) encloses an angle ($\alpha$) that is not equal to 90°, preferably is between 70° and 20°, with particular preference of 45° $\pm$ 15°, with the extent in the direction of travel (Z) of the feature (26) or of the feature combination (42, 44, 50, 54).

4. The conveying apparatus as claimed in claim 1 to 2, wherein the feature or the feature combination is structural and/or placed by adhesive bonding and/or painted on.

5. The conveying apparatus as claimed in one of claims 1 to 4, wherein a conveying unit has a projection device for projecting the feature or the feature combination from the conveying unit onto the surface of a conveying unit.

6. The conveying apparatus as claimed in one of claims 1 to 4, wherein the feature or the feature combination comprises cutouts, elevations or/and edges.

7. The conveying apparatus as claimed in claim 6, wherein the cutouts comprise holes or/and grooves.

8. The conveying apparatus as claimed in one of claims 1 to 7, wherein the feature or the feature combination at least partially consists of light.

9. The conveying apparatus as claimed in one of claims 1 to 8, having a control apparatus (25) which is set up to capture the length of the extents (Z, Y) of the feature or of the feature combination for determining the position and the location of the first conveying unit (12) relative to the second conveying unit (14).

10. The conveying apparatus as claimed in claim 9, wherein determining the position and the location comprises determining the extents of the feature or of the feature combination in a camera image (34).

11. The conveying apparatus as claimed in one of claims 9 or 10, wherein the control apparatus (25) is set up to record a calibration value for the camera (24) for determining the position and the location.

12. The conveying apparatus as claimed in one of claims 9 to 11, wherein the control apparatus (25) is set up to compare the length of the extent in the direction of travel (Z) and the length of the extent perpendicular to the direction of travel (Y) of the feature or of the feature combination to reference values.

13. The conveying apparatus as claimed in one of claims 9 to 12, wherein the control apparatus (25) is set up for determining the position of the two conveying units (12, 14) with respect to one another comprises determination of the distance of the two conveying units (12, 14) with respect to one another, a relative position of the two conveying units (12, 14) along a direction of conveyance or/and an angle of the conveying units (12, 14).

**Revendications**

1. Système de transport (10) destiné à transporter des supports de charges chargés ou non chargé, comportant

a) une première unité de transport (12) et une seconde unité de transport (14), dans laquelle chaque unité de transport (12, 14) peut se déplacer sur le sol à l'aide de roues (20), et la première unité de transport (12) et la seconde unité de transport (14) peuvent se déplacer l'une par rapport à l'autre et l'une indépendamment de l'autre le long d'une direction de marche respective (H, I),

**caractérisé en ce que** le système de transport

b) comporte un dispositif pour la détermination de la position et de l'orientation de la première unité de transport (12) par rapport à la seconde unité de transport (14), comprenant

   i) une caméra (24) disposée sur la première unité de transport (12),

   ii) un signe distinctif (26) disposé sur la seconde unité de transport (14) ou une combinaison de signes distinctifs (42, 44, 50, 54) disposés sur la seconde unité de transport (44), dans lequel le signe distinctif ou la combinaison de signes distinctifs présente une extension dans la direction de marche (Z) et une extension perpendiculairement à la direction de marche (Y), dans lequel les extensions peuvent être détectées par la caméra.

2. Système de transport selon la revendication 1, dans lequel une unité de transport est adaptée pour déterminer, au moyen de l'image détectée, au moins une distance de l'unité de transport et un angle entre l'unité de transport et l'extension du signe distinctif dans la direction de marche.

3. Système de transport selon la revendication 1 ou 2, dans lequel la caméra (24) et le signe distinctif (26) ou la combinaison de signes distinctifs (42, 44, 50, 54) sont disposés à la première unité de transport (12) et à la seconde unité de transport (14) de manière à ce qu'un axe de caméra (A) soit aligné avec le signe distinctif (26) ou la combinaison de signes distinctifs (42, 44, 50, 54), et l'axe de caméra (A) avec l'extension dans la direction de marche (Z) du signe distinctif (26) ou de la combinaison de signes distinctifs (42, 44, 50, 54) inclut un angle ($\alpha$) différent de 90°, de préférence, entre 70° et 20°, particulièrement préféré de 45° $\pm$ 15°.

4. Système de transport selon la revendication 1 à 3, dans lequel le signe distinctif ou la combinaison de signes distinctifs sont structurels, et / ou collés et / ou peints.

5. Système de transport selon la revendication 1 à 4, dans lequel une unité de transport comporte un dispositif de projection pour la projection du signe distinctif ou de la combinaison de signes distinctifs de l'unité de transport sur une surface de l'unité de transport.

6. Système de transport selon l'une quelconque des revendications 1 à 4, dans lequel le signe distinctif ou la combinaison de signes distinctifs comporte des évidements, des bosses et / ou des arêtes.

7. Système de transport selon la revendication 6, dans lequel les évidements comportent des troues et / ou des rainures.

8. Système de transport selon l'une quelconque des revendications 1 à 7, dans lequel le signe distinctif ou la combinaison de signes distinctifs est au moins partiellement de la lumière.

9. Système de transport selon l'une quelconque des revendications 1 à 8, comportant un dispositif de commande (25), qui est adapté pour détecter la longueur des extensions (Z, Y) du signe distinctif ou de la combinaison de signes distinctifs pour déterminer la position et l'orientation de la première unité de transport (12) par rapport à la seconde unité de transport (14).

10. Système de transport selon la revendication 9, dans lequel la détermination de la position et de l'orientation comporte la détermination des extensions du signe distinctif ou de la combinaison de signes distinctifs dans une image de la caméra (34).

11. Système de transport selon l'une quelconque des revendications 9 ou 10, dans lequel le dispositif de commande (25) est adapté pour enregistrer une valeur d'étalonnage pour la caméra (24) pour déterminer la position et l'orientation.

12. Système de transport selon l'une quelconque des revendications 9 à 11, dans lequel le dispositif de commande (25) est adapté pour comparer la longueur de l'extension dans la direction de marche (Z) et la longueur de l'extension perpendiculairement à la direction de marche (Y) du signe distinctif ou de la combinaison de signes distinctifs avec des valeurs de référence.

**13.** Système de transport selon l'une quelconque des revendications 9 à 12, dans lequel le dispositif de commande (25) est adapté pour comprendre une détermination de la distance des deux unités de transport (12, 14) l'une par rapport à l'autre, d'une position relative des deux unités de transport (12, 14) le long d'une direction de transport et / ou d'un angle des unités de transport (12, 14) pour la détermination de la position des deux unités de transport (12, 14) l'une par rapport à l'autre.

Figur 1

EP 3 281 077 B1

Figur 2A

Figur 2B

Figur 3A

Figur 3B

Figur 4B

Figur 4A

Figur 5B

Figur 5A

17

Figur 6A

Figur 6B

EP 3 281 077 B1

Figur 7B

Figur 7A

Fig. 8A

Fig. 8B

Fig. 8C

Fig. 8D

Fig. 8E

Fig. 8F

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007046868 A1
- EP 2827213 A2

- WO 2011123656 A1